Europäisches Patentamt

European Patent Office

Office européen des brevets

(19)

(11) Veröffentlichungsnummer: **0 063 234**
**B1**

(12) **EUROPÄISCHE PATENTSCHRIFT**

(45) Veröffentlichungstag der Patentschrift:
21.08.85

(21) Anmeldenummer: **82101931.2**

(22) Anmeldetag: **11.03.82**

(51) Int. Cl.⁴: **E 06 B 3/22**, B 29 C 65/00

(54) Extrudierte Kunststoff-Hohlprofilleiste für Fensterrahmen, aus derartigen Profilleisten hergestellter Fensterrahmen und Verfahren zur Herstellung eines solchen Fensterrahmens.

(30) Priorität: 15.04.81 DE 3115254
17.09.81 DE 3136863

(43) Veröffentlichungstag der Anmeldung:
27.10.82 Patentblatt 82/43

(45) Bekanntmachung des Hinweises auf die Patenterteilung:
21.08.85 Patentblatt 85/34

(84) Benannte Vertragsstaaten:
AT BE CH DE FR GB IT LI LU NL SE

(56) Entgegenhaltungen:
EP - A - 0 010 593
BE - A - 644 596
DE - A - 1 784 380
DE - A - 2 638 202
FR - A - 1 256 716
US - A - 3 866 373
US - A - 3 919 034

(73) Patentinhaber: Schock & Co. GmbH, Gmünder Strasse 65, D-7060 Schorndorf (DE)

(72) Erfinder: Schock, Karl, Aichenbachstrasse 136, D-7060 Schorndorf (DE)
Erfinder: Frank, Lothar, Schneeberg 51, D-7067 Plüderhausen (DE)

(74) Vertreter: Hoeger, Stellrecht & Partner, Uhlandstrasse 14c, D-7000 Stuttgart 1 (DE)

## Beschreibung

Die Erfindung betrifft eine extrudierte Kunststoff-Hohlprofilleiste für Fensterrahmen, mit einem zumindest im wesentlichen aus einem Thermoplast bestehenden Profilkörper, von dem mindestens eine Profilwand mit wenigstens einem mit dem Profilkunststoff stoffschlüssig verbundenen Verstärkungselement versehen ist.

Reine Kunststoff-Hohlprofilleisten weisen eine für die Herstellung von Fensterrahmen nicht hinreichende Festigkeit und Biegesteifigkeit, jedoch eine ganz erhebliche Temperatur-Längsdehnung auf, insbesondere bei Sonneneinstrahlung. Deshalb ist man hinsichtlich der Verstärkung solcher Kunststoff-Hohlprofilleisten schon die unterschiedlichsten Wege gegangen: Einschieben eines Holzkerns oder eines Kerns aus einem Metallhohlprofil in die Kunststoff-Hohlprofilleisten oder Einlegen kunstharzgebundener Glasfaserstäbe in den Profilleistenhohlraum mit nachfolgendem Füllen des letzteren mit einer aushärtenden Kunststoffmasse (THERMASSIV-FENSTERPROFILE der Schock GmbH). Abgesehen davon, daß einschobene Holz- oder Metallkerne wegen des mangelnden Verbunds mit dem Kunststoff-Hohlprofil und wegen der Korrosionsanfälligkeit der Metallprofile unbefriedigend sind, bringen die geschilderten Verstärkungen erhebliche Schwierigkeiten mit sich, wenn man bei der Herstellung der Fensterrahmen die Profilleisten auf den modernen Kunststoff-Präsisionsschweißmaschinen in den Rahmenecken stumpf miteinander verschweißen will.

Die EP-A-0 010 593 offenbart eine Kunststoff-Hohlprofilleiste für die Herstellung von Fensterrahmen od. dgl. die mit Verstärkungselementen in Gestalt von Glasfaserrovings verstärkt sein kann.

Aus der BE-A-644 596 ist ein Kunststoffprofil bekannt, in dem kunstharzgetränkte Glasfasern eingebettet sind.

Der Erfindung lag die Aufgabe zugrunde, eine relativ billige Kunststoff-Hohlprofilleiste für die Herstellung von Fensterrahmen zu entwickeln, die sich von ihren physikalischen Werten her (Temperaturausdehnungskoeffizient, Festigkeit, Biegesteifigkeit, Temperaturbeständigkeit und Wärmedehnung) für die Herstellung von Fensterrahmen besser als die bekannten Profilleisten eignet und sich bei der Rahmenherstellung dennoch einfach stumpfschweißen läßt. Ausgehend von einer Profilleiste der eingangs erwähnten Art läßt sich diese Aufgabe erfindungsgemäß dadurch lösen, daß das Verstärkungselement aus kunstharzgebundenen Verstärkungsfasern besteht und sein Bindemittel ein Thermoplast oder ein thermoeleastische Eigenschaften aufweisendes Kunstharz ist, welches bei der Schweißtemperatur des Profilkunststoffs derart erweicht, daß die Verstärkungsfasern umbiegbar sind. Unter Verstärkungsfasern sollen auch Mono- und Multifilamente verstanden werden, und bevorzugt werden Glasfaserrovings verwendet. Das erfindungsgemäß für das bzw. die Verstärkungselemente eingesetzte Bindemittel erlaubt es, aus erfindungsgemäßen Hohlprofilleisten hergestellte Rahmenschenkel stumpf miteinander zu verschweißen, ohne die Verstärkungselemente von den Stirnseiten der Rahmenschenkel her ein Stück weit zu entfernen, da sich die Enden der Verstärkungsfasern beim Stumpfschweißen und Zusammenpressen der Rahmenschenkel umbiegen lassen. Dadurch wird der Fertigungsaufwand erheblich verringert. Außerdem führen die erfindungsgemäßen Hohlprofilleisten aber auch zu Rahmen mit größerer Verwindungssteifigkeit, da sich die Verstärkungsfasern bis in die Schweißnähte hinein erstrecken. Da also primär von dem Bindemittel der Verstärkungsfasern lediglich zu fordern ist, daß es beim Erwärmen des Profilkörper-Kunststoffs im Zuge des Stumpfschweißens ein Umbiegen der Verstärkungsfasern zuläßt, so daß die letzteren das Zusammenpressen der miteinander zu verschweißenden Rahmenschenkel und die notwendige Ausbildung vom Schweißraupen nicht behindern, eignet sich grundsätzlich jedes thermoplastische oder thermoelastische Eigenschaften aufweisende, niedermolekulare, duroplastische Kunstharz als Bindemittel für die Verstärkungsfasern. Bevorzugt wird ein Bindemittel aus der Gruppe der ungesättigten Polyester, der Epoxy- oder der Acrylharze, da sich diese gut mit den für die extrudierten Kunststoff-Hohlprofilleisten zu bevorzugenden Kunststoffe wie PVC, PE oder ABS verbinden.

Die erfindungsgemäßen Profilleisten lassen sich aber auch verhältnismäßig billig herstellen, da man die kunstharzgetränkten Verstärkungsfasern schon beim Extrudieren der Hohlprofilleisten mit dem Profilkörper verbinden kann, indem man das bzw. die Verstärkungselemente in das Extrusionswerkzeug für die Herstellung der Profilleisten einlaufen läßt.

Die Verstärkungselemente selbst können so hergestellt werden, daß man die Verstärkungsfasern, z. B. die Glasfaserrovings, zunächst durch ein Bad hindurchführt, das aus einem Kunstharz besteht, welches gut an den Verstärkungsfasern haftet und sich beim Extrudieren der Hohlprofilleisten mit dem Profilkörper-Kunststoff verbindet, insbesondere verschweißt. Das Bindemittel kann dabei von der Art sein, daß die Härtung des Harzes erst durch eine nachfolgende Wärmebehandlung ausgelöst wird, worauf dann das Bindemittel beim Extrudieren der Profilleisten und beim Schweißen der Rahmenecken wieder weich wird. Zweckmäßigerweise verwendet man als Bindemittel Kunstharze, deren Aushärtung durch normale Vernetzung ohne wesentliche Quervernetzung erfolgt. Ein Beispiel eines geeigneten Bindemittels ist eine Harzlösung von MMA und PMMA in einem Verhältnis, daß sich ein Polymergehalt von ca. 20 bis 30% ergibt, mit einem Warmhärter, z. B. Benzoyl-Peroxyd.

Zur Erhöhung der Biegesteifigkeit der in Rede stehenden Kunststoff-Hohlprofilleisten kann es sich empfehlen, als Verstärkungselemente Verstärkungsbänder aus kunstharzgebundenen Glasfasern zu verwenden, wie sie bereits auf dem Markt erhältlich sind, da solche Glasfaserbänder beispielsweise bei der Herstellung von Kunststoffskiern verarbeitet werden. Die Glasfasern können in der Form von in Bandlängsrichtung verlaufenden Rovings, als Gewebe, Vlies oder dergleichen vorliegen. Solche Glasfaserbänder könnte man auf die Oberfläche der Hohlprofilleisten aufkleben oder aufschweißen, da man dann wegen des großen Abstands zur neutralen Faser den größten Effekt hinsichtlich der Erhöhung der Biegesteifigkeit erzielen würde; bei einer bevorzugten Ausführungsform sind die Verstärkungselemente bzw. Glasfaserbänder jedoch in den Profilwandkunststoff eingebettet und von diesem allseitig umschlossen.

Schließlich wird empfohlen, den Profilhohlraum zumindest teilweise mit einem Kunststoff-Leichtschaum geringer Festigkeit, insbesondere PU-Leichtschaum, zu füllen, um den Wärmedurchgangswert der Profilleisten noch zu erhöhen. Eine solche Füllung behindert das Stumpfschweißen nicht, da sich der Schaum der Rahmenschenkel vor dem Schweißen mit einem entsprechend gestalteten Stempel ganz einfach von den Stirnflächen der Profilleisten aus in das Profilinnere hinein zurückdrücken läßt.

Ordnet man die Verstärkungselemente in der Hohlprofilleiste im Querabstand voneinander an, so daß zwischen ihnen vom Profilkunststoff gebildete Längsbereiche liegen, so führt dies zu besonders steifen Rahmen, da dann der Profilkunststoff in den Schweißnahtebenen zwischen den Verstärkungselementen Kunststoffbrücken bildet.

Zur Herstellung eines Fensterrahmens aus erfindungsgemäßen Profilleisten kann man im Prinzip wie beim bekannten Arbeiten mit den auf dem Markt erhältlichen Stumpfschweißmaschinen vorgehen: Die Profilleisten werden im Bereich der Stirnflächen, z. B. der Gehrungsschnittflächen, erhitzt und dann mit diesen Stirnflächen gegeneinander gepreßt, wobei beim Schweißen einer Rahmenecke auf die die Rahmenaußen- und die Rahmeninnenseite bildenden Profilwände jeweils zwei Abdeckungen aufgelegt werden, welche zunächst einen die Stirnflächen freigebenden Spalt zwischen sich bilden und beim Gegeneinanderpressen der Stirnflächen gegeneinandergefahren werden, wobei erfindungsgemäß diese Abdeckungen derart gegeneinandergefahren werden, daß beim Gegeneinanderpressen der Profilstirnflächen die Verstärkungsfasern zusammen mit dem größten Teil des dabei verdrängten Profilkörper-Kunststoffs in Richtung auf das Profilleisteninnere gedrängt werden. Auf diese Weise wird verhindert, daß die Verstärkungsfasern an den Schweißnähten nach dem Abstechen der beim Schweißen gebildeten Schweißraupen an die Rahmenoberfläche treten.

Ein aus erfindungsgemäßen Profilleisten auf diese Weise hergestellter erfindungsgemäßer Rahmen zeichnet sich also dadurch aus, daß die Verstärkungsfasern an den Schweißnähten im wesentlichen in Richtung auf das Profilleisteninnere abgebogen sind.

Selbstverständlich läßt sich die Erfindung nicht nur auf die Außenschenkel von Fensterrahmen anwenden, sondern auch auf sogenannte Kämpferprofile.

Die erfindungsgemäße Gestaltung einer Kunststoff-Hohlprofilleiste führt neben der Vermeidung der vorstehend aufgeführten Nachteile des Standes der Technik zu folgenden Vorteilen: Für das Stumpfschweißen sind keinerlei Vorarbeiten erforderlich, das Profil zeigt eine ganz geringe thermische Längendehnung und kann so gestaltet werden, daß es bei einseitiger Erwärmung, z. B. durch Sonneneinstrahlung, sich nur minimal verzieht, es besteht keinerlei Rostgefahr, der Herstellungspreis erfindungsgemäßer Fensterrahmen ist sehr günstig, beim Ablängen erfindungsgemäßer Profilleisten fallen keine Metallspäne an, die zu verarbeitenden Verstärkungselemente einschließlich der erwähnten Glasfaserbänder sind auf dem Markt bereits erhältlich und sie zeigen wegen ihrer geringen Wärmeleitfähigkeit beim Stumpfschweißen nicht den Nachteil, daß die Wärme von der Schweißstelle »absaugen«.

Weitere Merkmale, Vorteile und Einzelheiten der Erfindung ergeben sich aus den beigefügten Ansprüchen und/oder aus der zeichnerischen Darstellung sowie der nachfolgenden Beschreibung einiger Ausführungsformen erfindungsgemäßer Profilleisten sowie einer Ausführungsform des Schweißverfahrens zur Herstellung von Rahmenecken; in der Zeichnung zeigt

Fig. 1 einen Querschnitt durch eine erste Ausführungsform der erfindungsgemäßen Profilleiste mit einzelnen, in zwei Profilwände eingelegten Verstärkungselementen;

Fig. 2—5 Querschnitte durch vier weitere Ausführungsformen der erfindungsgemäßen Profilleiste mit aus kunstharzgebundenen Glasfasern bestehenden Verstärkungsbändern;

Fig. 6 und 7 schematische Darstellungen des Schweißvorgangs; und

Fig. 8 einen Querschnitt ähnlich Fig. 1 durch eine besonders vorteilhafte Ausführungsform der erfindungsgemäßen Profilleiste.

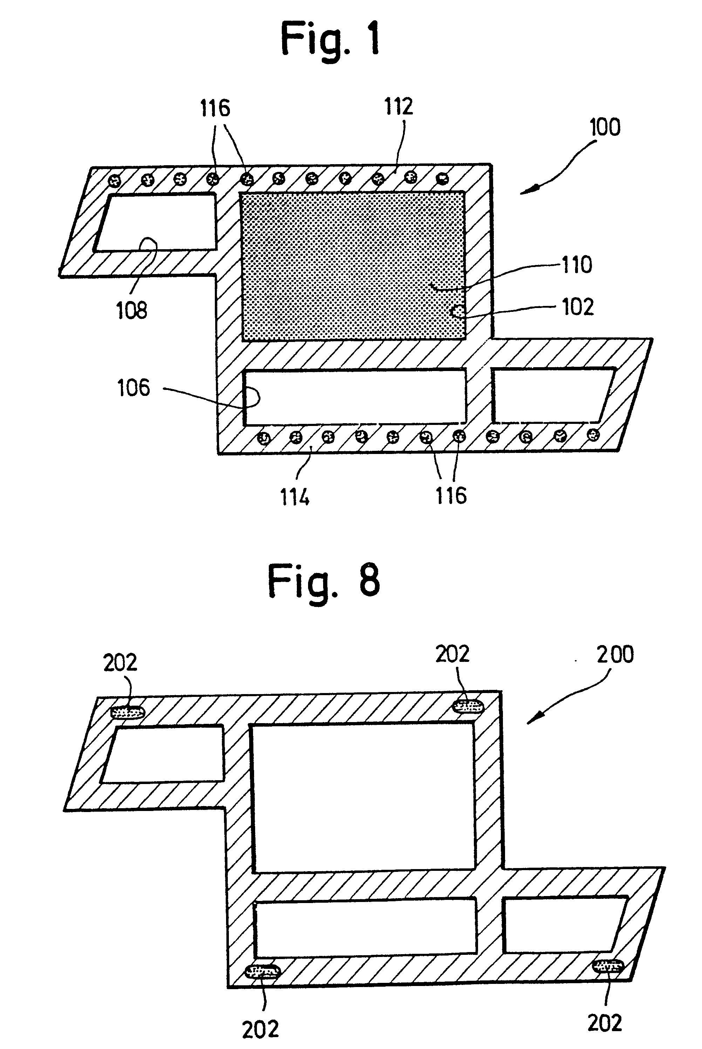

Die Fig. 1 zeigt ein Kunststoff-Hohlprofil 100 mit mehreren Hohlkammern 102, 104, 106 und 108, von denen die Hohlkammer 102 von einem Polyurethan-Leichtschaum-Kern 110 ausgefüllt wird. In die später die Außen- und die Innenseite des Fensterrahmens bildenden Profilwände 112 und 114 sind diskrete, in Leistenlängsrichtung verlaufende Verstärkungselemente 116 eingebettet, bei denen es sich um kunstharzgetränkte Glasfaserrovings handelt, wobei als Bindemittel für die Glasfasern Acrylharz verwendet wurde.

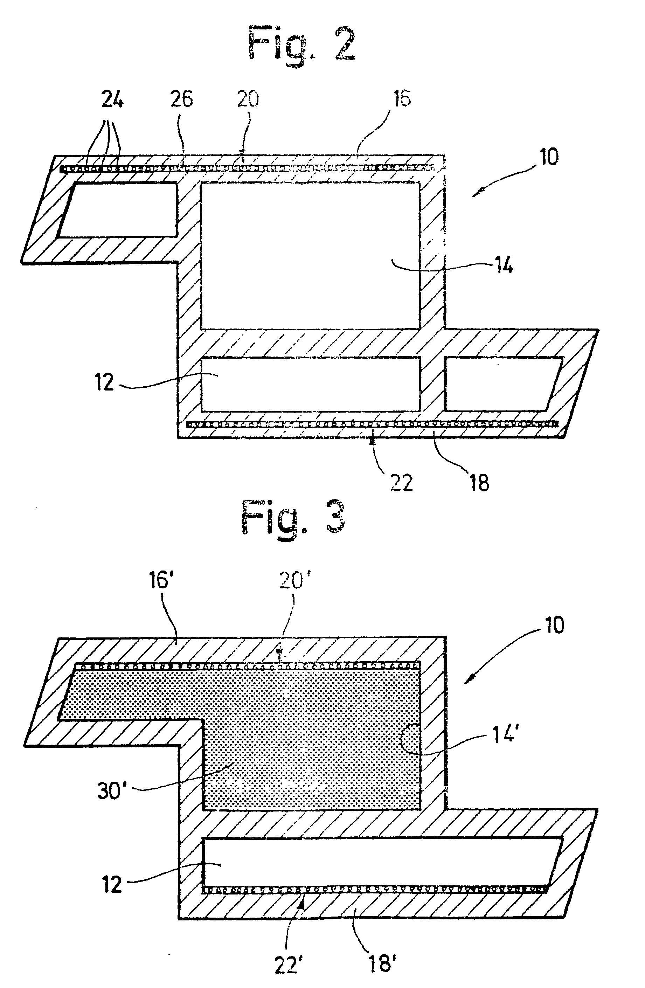

Die Fig. 2 zeigt ein Kunststoff-Hohlprofil 10 mit Hohlkammern 12 und 14, in dessen später die Rahmenaußen- und die Rahmeninnenseite bildenden Profilwände 16 und 18 Glasfaserbänder 20 und 22 eingebettet sind. Diese bestehen z. B. aus Glasfaser-Rovings 24 und Acrylharz-Bindemittel 26. Bei der Ausführungsform nach Fig. 2 sind die Glasfaserbänder 20, 22 in den Kunststoff der Profilwände eingebettet, wobei vorzugsweise die innerhalb der Glasfaserbänder liegende Kunststoffschicht dünner ist als die die Außenseite bildende Kunststoffschicht.

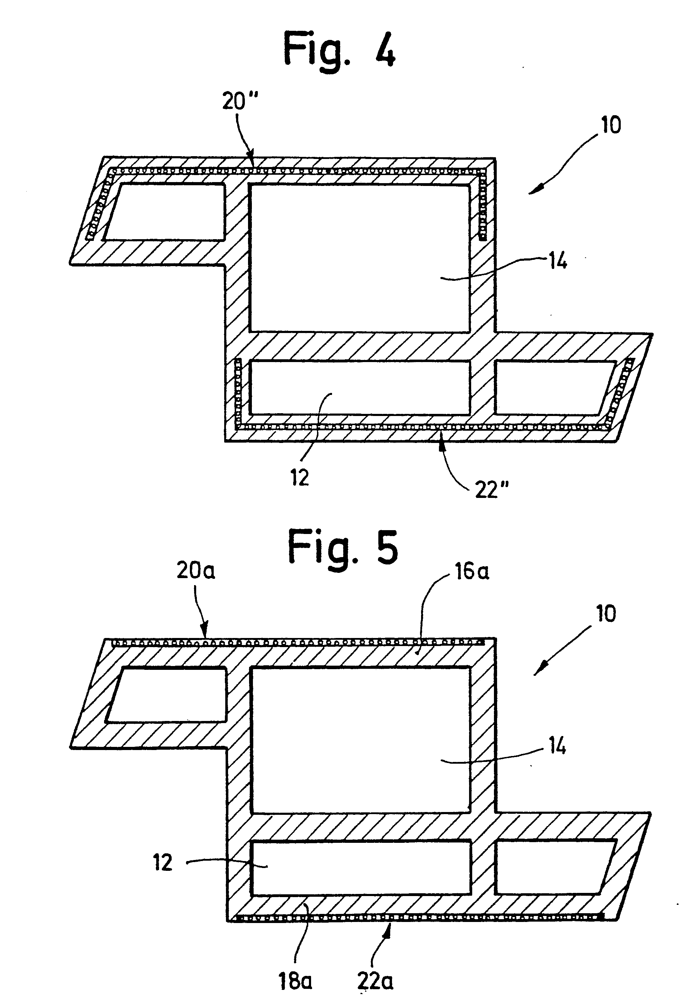

Die Ausführungsform gemäß Fig. 3 unterscheidet sich von der Ausführungsform nach Fig. 2 nur dadurch, daß die Glasfaserbänder 20' und 22' auf der Innenseite der Profilwände 16' und 18' liegen und daß sich in der Hohlkammer 14' ein Polyurethan-Leichtschaum-Kern 30' befindet.

Wie die Ausführungsform gemäß Fig. 4 erkennen läßt, können erfindungsgemäß eingesetzte Glasfaserbänder 20" und 22" beim Extrudieren des Kunststoff-Hohlprofils auch abgewinkelt werden.

Die Ausführungsform gemäß Fig. 5 soll schließlich zeigen, daß man die erfindungsgemäß einzusetzenden Glasfaserbänder 20a und 22a auch auf die Außenflächen der Profilwände 16a und 18a aufsetzen kann, ja man könnte selbst daran denken, die Glasfaserbänder nach dem Extrudieren aufzukleben.

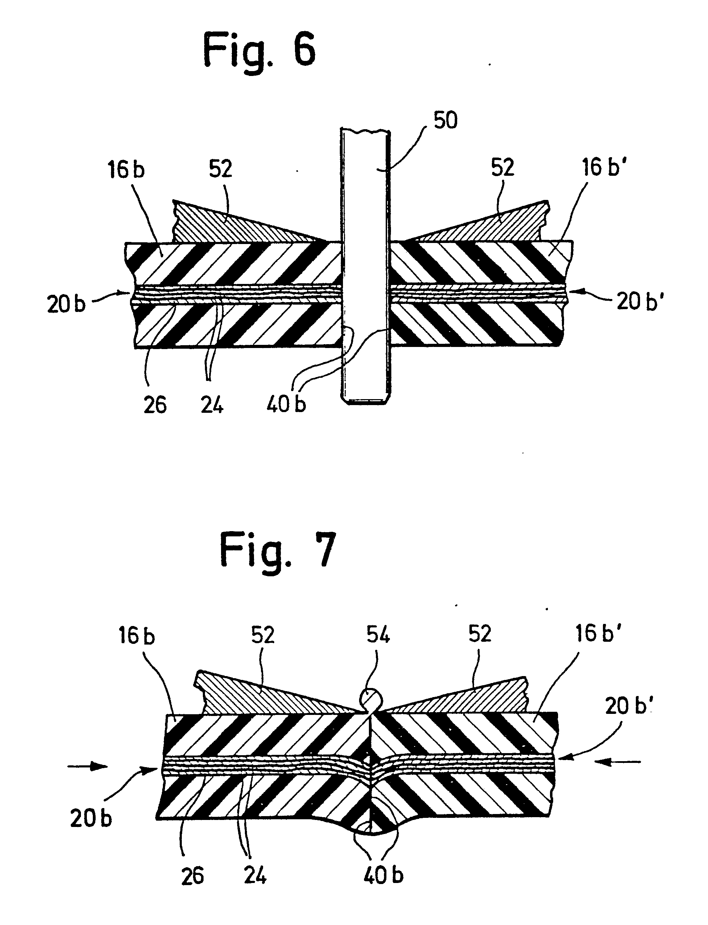

Anhand der Fig. 6 und 7 sollen das erfindungsgemäße Stumpfschweißen und der Aufbau einer erfindungsgemäßen Schweißstelle erläutert werden.

Die Fig. 6 zeigt Profilwände 16b und 16b' zweier erfindungsgemäßer Kunststoff-Hohlprofilleisten, die mit ihren Stirnflächen 40b stumpf miteinander verschweiß werden sollen. In diesen Profilwänden liegen erfindungsgemäße Glasfaserbänder 20b und 20b'.

Wie bei bekannten Kunststoff-Stumpfschweißmaschinen, beispielsweise bei dem Stumpschweißautomaten HASSOMAT ZLN 2 der Firma Hassomat Maschinenbau GmbH & Co., Helbingstraße 63, 2000 Hamburg 70, üblich, wird zum Schweißen zunächst ein sogenannter Schweißspiegel 50 zwischen die miteinander zu verbindenden Stirnflächen 40b eingefahren, um den Kunststoff des eigentlichen Kunststoff-Hohlprofils so stark zu erhitzen, daß er zumindest teigig wird; bei diesen Temperaturen soll das Kunstharzbindemittel der erfindungsgemäßen Glasfaserbänder ebenfalls plastisch oder elastisch nachgiebig werden. Die erwähnten Stumpfschweißmaschinen haben zu beiden Seiten der Schweißstelle auch als Abdeckungen dienende Messer, die mit 52 bezeichnet wurden. Die Schneidkanten dieser Messer besitzen zunächst einen Abstand von den Profilstirnflächen 40b.

Nachdem der Kunststoff hinreichend erhitzt wurde, wird der Schweißspiegel 50 aus dem Spalt zwischen den Profilleistenenden herausgezogen, worauf die miteinander zu verschweißenden Profilleisten mit ihren Stirnflächen gegeneinandergepreßt werden. Gleichzeitig werden die Messer 52 zusammengefahren, was folgendes bewirkt:

um eine qualitativ hochwertige Schweißverbindung zu erhalten, müssen die Profilleistenenden so zusammengedrückt werden, daß der Kunststoff nach der Seite zu verdrängt wird. Die Messer 52 verhindern jedoch, daß der Kunststoff in gleichem Maße nach außen und in das Profilinnere hinein verdrängt wird, vielmehr bewirken sie, daß der überwiegende Teil des beim Stumpfschweißen verdrängten Kunststoffs zusammen mit den sich bis zu den Stirnflächen 40b erstreckenden Glasfaserbändern 20b und 20b' in das Profilleisteninnere hinein verdrängt wird, während sich zwischen den Schneidkanten der zumindest nahezu zusammengefahrenen Messer 52 lediglich eine kleine Kunststoffraupe 54 bildet, welche später ohne weiteres abgestochen werden kann.

Es wird also verhindert, daß die Glasfasern der Glasfaserbänder beim Stumpfschweißen an die Rahmenoberfläche treten können.

Verzichtet man auf die als Abdeckungen wirkenden Messer 52, so fächern die Glasfasern der Verstärkungselemente 116 bzw. der Glasfaserrovinge 24 in der von den Stirnflächen 40b gebildeten Schweißnahtebene hauptsächlich nach allen Seiten auf, wie dies bei einem stumpf auf eine Fläche gestoßenen Pinsel der Fall ist.

Die Fig. 8 zeigt schließlich ein Kunststoff-Hohlprofil 200 mit erfindungsgemäß zu Verstärkungselementen 202 zusammengefaßten kunstharzgetränkten Glasfasern oder Glasfaserrovings, die beim Extrudieren des Hohlprofils dem Extrusionswerkzeug zugeführt werden, und zwar entweder mit bereits ausgehärtetem oder noch auszuhärtendem Kunstharz-Bindemittel. Nach einem weiteren Merkmal der Erfindung sind die Verstärkungselemente 202 in den vier Ecken des Profils 200 angeordnet und besitzen vorzugsweise Querschnitts-Abmessungen von ca. 8 · 3 mm.

## Patentansprüche

1. Extrudierte Kunststoff-Hohlprofilleiste für Fensterrahmen, mit einem zumindest im wesentlichen aus einem Thermoplast bestehenden Profilkörper (10, 100, 200), von dem mindestens eine Profilwand (16, 18, 112, 114) mit wenigstens einem mit dem Profilkunststoff stoffschlüssig verbundenen Verstärkungselement (20, 22, 116, 202) versehen ist, dadurch gekennzeichnet, daß das Verstärkungselement (20, 22, 116, 202) aus Kunstharz-gebundenen Verstärkungsfasern (24) besteht und sein Bindemittel (26) ein Thermoplast oder ein thermoelastische Eigenschaften aufweisendes Kunstharz ist, welches bei der Schweißtemperatur des Profilkunststoffs derart erweicht, daß die Verstärkungsfasern umbiegbar sind.

2. Profilleiste nach Anspruch 1, dadurch gekennzeichnet, daß der Thermoplast des Profilkörpers PVC, PE oder ABS ist.

3. Profilleiste nach Anspruch 1 oder 2, dadurch gekennzeichnet, daß das Bindemittel ein Acrylharz, ein ungesättigter niedermolekularer Polyester, ein Epoxidharz, ein linearer Polyester oder ein lineares Polyurethan ist.

4. Profilleiste nach einem oder mehreren der Ansprüche 1 bis 3, dadurch gekennzeichnet, daß das Bindemittel bei ungefähr 250°C derart erweicht, daß die Verstärkungsfasern umbiegbar sind.

5. Profilleiste nach einem oder mehreren der Ansprüche 1 bis 4, dadurch gekennzeichnet, daß die Verstärkungselemente von Verstärkungsbändern aus kunstharzgebundenen Glasfasern gebildet werden.

6. Profilleiste nach einem oder mehreren der vorstehenden Ansprüche, dadurch gekennzeichnet, daß die Verstärkungselemente mit dem Profilkörper verschweißt sind.

7. Profilleiste nach einem oder mehreren der vorstehenden Ansprüche, dadurch gekennzeichnet, daß die Verstärkungselemente in die Profilwand eingebettet und vom Profilkunststoff allseitig umschlossen sind.

8. Profilleiste nach Anspruch 7, dadurch gekennzeichnet, daß mehrere Verstärkungselemente im Querabstand voneinander angeordnet sind, so daß zwischen ihnen vom Profilkunststoff gebildete Längsbereiche liegen.

9. Profilleiste nach einem oder mehreren der vorstehenden Ansprüche, dadurch gekennzeichnet, daß der Profilhohlraum (102) zumindest teilweise mit einem Kunststoff-Leichtschaum geringer Festigkeit, insbesondere mit PU-Leichtschaum gefüllt ist.

10. Aus Profilleisten nach einem oder mehreren der vorstehenden Ansprüche hergestellter Fensterrahmen mit längs ihrer Stirnflächen, insbesondere längs Gehrungsschnittflächen, stumpf miteinander verschweißten Rahmenschenkeln, dadurch gekennzeichnet, daß sich die Verstärkungsfasern bis in die Schweißnähte des Rahmens hineinerstrecken und dort in Richtung auf die jeweilige Schweißnahtebene abgebogen sind.

11. Rahmen nach Anspruch 10, dadurch gekennzeichnet, daß die Verstärkungsfasern an den Schweißnähten im wesentlichen auf das Profilleisteninnere abgebogen sind.

12. Rahmen nach Anspruch 10 oder 11, dadurch gekennzeichnet, daß der Profilkunststoff in der Schweißnahtebene zwischen den Verstärkungselementen Kunststoffbrücken bildet.

13. Verfahren zur Herstellung eines Rahmens nach einem oder mehreren der Ansprüche 10 bis 12, bei dem die Profilleisten im Bereich der Stirnflächen (40b) erhitzt und dann mit den letzteren gegeneinander gepreßt werden, wobei beim Schweißen einer Rahmenecke auf die die Rahmenaußen- und die Rahmeninnenseite bildenden Profilwände der miteinander zu verbindenden Profilleisten jeweils zwei Abdeckungen (52) aufgelegt werden, welche zunächst einen die Profilleistenstirnflächen freigebenden Spalt zwischen sich bilden und beim Gegeneinanderpressen dieser Stirnflächen gegeneinander gefahren werden, dadurch gekennzeichnet, daß die Abdeckungen (52) derart gegeneinandergefahren werden, daß beim Gegeneinanderpressen der Profilleistenstirnflächen die Verstärkungsfasern (24) zusammen mit dem größeren Teil des dabei verdrängten Profilwandkunststoffs in Richtung auf das Profilleisteninnere gedrängt werden.

## Claims

1. An extruded plastics material hollow profiled strip for window frames, having a profile body (10, 100, 200) consisting at least essentially of a thermoplastic material, at least one profile wall (16, 18, 112, 114) of said body being provided with at least one reinforcement element (20, 22, 116, 202) integrally connected with the plastics material of the profile, characterized in that the reinforcement element (20, 22, 116, 202) consists of reinforcement fibres (24) bonded to each other by a synthetic resin cement (26) which is a thermoplastics material or a synthetic resin having thermoelastic properties, said synthetic resin softening at the welding temperature of the plastics material of the profile such that the reinforcement fibres are deflectable.

2. Profiled strip as defined in claim 1, characterized in that the thermoplastics material of the profile body is PVC, PE or acrylonitrile-butadiene-styrene plastics (ASB polymers).

3. Profiled strip as defined in claims 1 or 2, characterized in that the bonding agent is an acrylic resin, an unsaturated low-molecular polyester, an epoxy resin, a linear polyester or a linear polyurethane.

4. Profiled strip as defined in any or several of claims 1 to 3, characterized in that the bonding agent softens at approximately 250°C such that the reinforcement fibres are deflectable.

5. Profiled strip as defined in any or several of claims 1 to 4, characterized in that the reinforcement elements are formed by reinforcement bands of resinoid-bonded glass fibres.

6. Profiled strip as defined in any or several of the preceding claims, characterized in that the reinforcement elements are fuse-welded to the profile body.

7. Profiled strip as defined in any or several of the preceding claims, characterized in that the reinforcement elements are embedded in the profile wall and are surrounded on all sides by the profile plastics material.

8. Profiled strip as defined in claim 7, characterized in that a plurality of reinforcement elements are spaced in transverse relation to each other such that between them longitudinal regions are formed by the profile plastics material.

9. Profiled strip as defined in any or several of the preceding claims, characterized in that the profile cavity (102) is filled at least partially with a plastics material light foam of low density, preferably with PU light foam.

10. Window frame produced from profiled strips as defined in any or several of the preceding claims comprising frame pieces butt-welded together along their front faces, in perticular along mitre sectional areas, characterized in that the reinforcement fibres extend into the weld seams of the frame and are there deflected towards the direction of the respective weld seam plane.

11. Frame as defined in claim 10, characterized in that the reinforcement fibres at the weld seams are essentially deflected towards the interior of the profiled strips.

12. Frame as defined in claims 10 or 11, characterized in that in the weld seam planes the plastics material of the profile forms plastics material bridges between the reinforcement elements.

13. Method of producing a frame as defined in any or several of claims 10 to 12, in which the profiled strips are heated in the region of their front faces (40b) and then pressed against one another with said front faces, wherein, during welding of a frame corner, two covers (52) are pressed each time against those profile walls of each of the profiled strips to be connected to one another which form the outer and inner sides of the frame, the covers of corresponding walls initially forming between them a gap releasing the front faces of the profiled strips and being moved towards one another when these front faces are pressed against each other, characterized in that the covers (52) are moved towards each other in such a way that when the front faces of the profiled strips are pressed against each other the reinforcement fibres (24), together with the larger part of the profile wall plastics material thereby displaced, is urged towards the interior of the profiled strips.

**Revendications**

1.Barre profilée creuse en substance synthétique extrudée pour châssis de fenêtre, comprenant un corps profilé (10, 100, 200) qui est constitué au moins sensiblement d'une matière thermoplastique et dont au moins une paroi de profilé (16, 18, 112, 114) est pourvue d'au moins un élément de renforcement (20, 22, 116, 202) relié à liaison de matière à la substance synthétique du profilé, caractérisée en ce que l'élément de renforcement (20, 22, 116, 202) est constitué de fibres de renforcement liées par de la résine synthétique (24) et en ce que son liant (26) est une matière thermoplastique ou une résine synthétique présentant des propriétés thermoélastiques, qui se ramollit à la température de soudage de la substance synthétique du profilé de telle façon que les fibres de renforcement puisssant être repliées.

2. Barre profilée suivant la revendication 1, caractérisée en ce que la substance thermoplastique du corps profilé est du CPV, du PE ou de l'ABS.

3. Barre profilée suivant l'une des revendications 1 et 2, caractérisé en ce que le liant est une résine acrylique, un polyester insaturé de faible poids moléculaire, une résine époxy, un polyester linéaire ou un polyuréthanne linéaire.

4. Barre profilée suivant une ou plusieurs des revendications 1 à 3, caractérisée en ce que le liant se ramollit à environ 250°C de telle façon que les fibres de renforcement puissent être repliées.

5. Barre profilée suivant une ou plusieurs des revendications 1 à 4, caractérisée en ce que les éléments de renforcement des bandes de renforcement sont formés de fibres de verre liées par de la résine synthétique.

6. Barre profilée suivant une ou plusieurs des revendications précédentes, caractérisée en ce que les éléments de renforcement sont soudés ou corps profilé.

7. Barre profilée suivant une ou plusieurs des revendications précédentes, caractérisée en ce que les éléments de renforcement sont noyés dans la paroi de profilé et sont enfermés de tous côtés par de la substance synthétique du profilé.

8. Barre profilée suivant la revendication 7, caractérisée en ce que plusieurs éléments de renforcement sont agencés à une certaine distance transversale l'un de l'autre de façon qu'entre eux il y ait des zones longitudinales formées par de la substance synthétique du profilé.

9. Barre profilée suivant une ou plusieurs des revendications précédentes, caractérisée en ce que la cavité (102) du profilé est au moins partiellement remplie d'une mousse légère de substance synthétique de faible résistance, en particulier de mousse légère de PU.

10. Châssis de fênetre préparé à partir de barres profilées suivant une ou plusieurs des revendications précédentes, ce châssis comprenant des traverses ou montants soudés l'un à l'autre bout à bout le long de leurs faces frontales, en particulier le long de leurs faces de coupe en biais, caractérisé en ce que les fibres de renforcement s'étendent jusque dans le joint de soudage du châssis et là sont repliées en direction du plan du joint de soudage respectif.

11. Châssis suivant la revendication 10, caractérisé en ce que les fibres de renforcement sont repliées sur les joints de soudage essentiellement vers l'intérieur de la barre profilée.

12. Châssis suivant l'une des revendications 10 et 11, caractérisé en ce que la substance synthétique du profilé forme dans le plan ⸗ ╵ joint de soudage des ponts de substance synthétique entre les éléments de renforcement.

13. Procédé de préparation d'un châssis suivant une ou plusieurs des revendications 10 à 12, dans lequel les barres profilées sont chauffées dans la zone des faces frontales (40b) et ensuite pressées l'une contre l'autre par ces dernières, chaque fois deux recouvrements (52) étant appliqués au cours du soudage d'un coin de châssis sur les parois de profilé, qui forment les côtés externe et interne du châssis, des barres profilées à relier ensemble, ces recouvrements formant tout d'abord entre eux une fente libérant les faces frontales des barres profilées et étant amenés l'un contre l'autre au cours du pressage de ces faces frontales, caractérisé en ce que les recouvrements (52) sont amenés l'un contre l'autre de telle façon que, au cours du pressage des faces frontales des barres profilées, les fibres de renforcement (24) sont poussées en direction de l'intérieur des barres profilées conjointement avec la plus grande part de la substance synthétique de la paroi profilée, déplacée.

# Fig. 1

# Fig. 8

# Fig. 2

# Fig. 3

# Fig. 4

# Fig. 5

# Fig. 6

50

16 b    52              52    16 b'

20 b →                              ← 20 b'

26    24    40 b

# Fig. 7

16 b    52    54    52    16 b'

20 b'

→  →                              ←  ←

20 b

26    24    40 b